# EUROPEAN PATENT SPECIFICATION

(11) **EP 1 680 629 B1**
(45) Date of publication and mention of the grant of the patent: **02.01.2008**
(21) Application number: 03751547.5
(22) Date of filing: 14.10.2003
(51) Int. Cl.: F24F 7/08

(54) **VENTILATOR**
VENTILATOR
VENTILATEUR

(43) Date of publication of application: 19.07.2006
(73) Proprietor: LG Electronics, Inc., Seoul 150-010 (KR)
(72) Inventor: CHO, Min-Chul, Busan 616-830 (KR); LEE, Seonghwan, Kyungsangnam-Do 641-091 (KR); SHIN, Soo-Yeon, Booyoung Apt. 1202-902, Kyungsangnam-Do 621-833 (KR)
(74) Representative: Wunderlich, Rainer
(86) International application number: PCT/KR2003/002131
(87) International publication number: WO 2005/036069

(56) References cited:
- JP-A- 63 210 544
- JP-A- 2000 257 935
- JP-A- 2003 074 937

## Description

### TECHNICAL FIELD

The present invention relates to a ventilator for ventilating an indoor space by externally discharging indoor air and internally sucking outdoor air.

### BACKGROUND ART

In general, the carbon dioxide content of a ir increases in a hermetically sealed space with the passage of time because of breathing of living objects, and has detrimental effects on breathing. Accordingly, a ventilator is used to exchange contaminated indoor air for fresh outdoor air especially in a narrow space where a number of people stay such as an office or vehicle.

The ventilator includes an air blower for forcibly blowing indoor air and outdoor air, and repeats a process of externally discharging contaminated indoor air and internally sucking fresh outdoor air.

However, when cooling and ventilating operations are performed indoors at the same time, cooled indoor air is exhausted and hot outdoor air is sucked. Thus, a temperature of indoor air is higher than a cooling temperature, to reduce cooling efficiency. In the case that heating and ventilating operations are simultaneously performed indoors, heated indoor air is exhausted and cooled outdoor air is sucked. As a result, the temperature of indoor air is lower than a heating temperature, to reduce heating efficiency.

Therefore, the ventilator further includes a heat exchanger for exchanging heat between indoor air and outdoor air.

In detail, according to Japanese Laid-Open Patent Application 11-287492 shown in Fig. 1, an outdoor air suction hole 4 a for sucking outdoor a ir and an indoor air discharge hole 6b for discharging indoor air are formed on one surface of a rectangular casing 2, an outdoor air discharge hole 4b for discharging outdoor air and an indoor air suction hole 6a for sucking indoor air are formed on the other surface of the casing 2, a heat exchanger 8 for forming passages for separately flowing indoor air and outdoor air, and exchanging heat is installed in the center of the casing 2 to cross the casing 2, and an air supply fan 10 and an air exhaust fan 20 are installed in both edges of the casing 2 to be positioned inside the outdoor air discharge hole 4b and the indoor air discharge hole 6b.

In addition, an air path for guiding outdoor air sucked from the outdoor air suction hole 4a to the heat exchanger 8 to be discharged to the outdoor air discharge hole 4b, and an air path for guiding indoor air sucked from the indoor air suction hole 6a to the heat exchanger 8 to be discharged to the indoor air discharge hole 6b are formed in the casing 2.

Here, the heat exchanger 8 is installed to be connected or disconnected through a checking hole 2a formed in the center of one surface of the casing 2.

On the other hand, as disclosed in Japanese Laid-Open Patent Application 09-137984 shown in Figs. 2 and 3, an outdoor air suction hole 34a for sucking outdoor air and an indoor air discharge hole 3 6b for discharging indoor air are formed on one surface of a rectangular casing 32, an outdoor air discharge hole 34b for discharging outdoor air and an indoor air suction hole 36a for sucking indoor air are formed on the other surface of the casing 32, a heat exchanger 38 for forming passages for separately flowing outdoor air and indoor air is installed in the center of the casing 32 to cross the casing 32, and an air supply fan 40 for sucking outdoor air and an air exhaust fan 45 for discharging indoor air are installed in the center of one surface of the casing 32 and the center of the other surface of the casing 32, respectively.

In addition, partitioning units 37a and 37b for guiding outdoor air sucked from the outdoor air suction hole 34a to the heat exchanger 38, or guiding indoor air sucked from the indoor air suction hole 36a to the heat exchanger 38 are installed in the casing 32, and ducts 39a and 39b for guiding outdoor air passing through the heat exchanger 38 to be discharged to the outdoor air discharge hole 34b, or guiding indoor air passing through the heat exchanger 38 to be discharged to the indoor air discharge hole 36b are installed in the casing 32, to form air paths for separately flowing outdoor air and indoor air.

The h eat exchanger 38 is installed in the casing 32 to be connected or disconnected through a checking hole 32a formed in the center of one surface of the casing 32. The edges of the heat exchanger 38 are slidably fixed into rails 35 formed in both ends of the partitioning units 37a and 37b and the top and bottom inside surfaces of the casing 32.

However, in the conventional ventilator, when the air supply fan is operated, outdoor air is sucked through the passages formed between the outdoor air suction hole and the outdoor air discharge hole, and when the air exhaust fan is operated, indoor air is discharged through the passages formed between the indoor air suction hole and the indoor air discharge hole. Accordingly, an outdoor air suction amount and an indoor air discharge amount are controlled merely by the rotation speed of the air supply fan and the air exhaust fan, and thus limited.

Moreover, a filter is built in the ventilator to filter alien substances of outdoor air such as dust before outdoor air is sucked to the heat exchanger. However, the ventilator is installed on a ceiling or inner wall of a building, and thus the filter is not cleaned.

Furthermore, when the filter is covered with alien substances such as dust, suction flow of outdoor air decreases. As a result, air flow efficiency and heat exchange efficiency are reduced.

### DISCLOSURE OF THE INVENTION

An object of the present invention is to provide a ventilator which can appropriately control an outdoor air suction amount or indoor air discharge amount on the basis of the indoor environment, and maximize the outdoor air suction amount or indoor air discharge amount.

Another object of the present invention is to provide a ventilator which can consult users' convenience and improve air flow efficiency and heat exchange efficiency, by automatically discharging alien substances of outdoor air such as dust.

In order to achieve the above-described objects of the invention, there is provided a ventilator including: a casing having an indoor air suction hole and an outdoor air discharge hole connected to the indoor side, and an indoor air discharge hole and an outdoor air suction hole connected to the outdoor side; a heat exchanger installed in the casing, for forming first and second passages for separately flowing indoor air and outdoor air, and exchanging heat between indoor air and outdoor air; a first air blowing means installed on passages formed between the indoor air suction hole and the indoor air discharge hole, for discharging indoor air or alternatively sucking outdoor air according to the rotation direction; and a second air blowing means installed on passages formed between the outdoor air suction hole and the outdoor air discharge hole, for sucking outdoor air or alternatively discharging indoor air according to the rotation direction.

According to one aspect of the invention, each of the first and second air blowing means includes a spiral fan rotated in the forward or alternatively backward direction, for forcibly flowing air in the axial direction or facing direction.

Here, the first air blowing means is installed inside the indoor air discharge hole, and the second air blowing means is installed inside the outdoor air suction hole.

According to another aspect of the invention, the spiral fan includes a cylindrical hub, and spiral blades being spirally twisted from one end to the other end of the hub on the outer circumference of the hub, and having a predetermined width in the axial direction.

According to yet another aspect of the invention, each of the first and second air blowing means further includes a motor which a rotation axis protruded from the rear end of the spiral fan is coupled to, the motor rotating the rotation axis in the forward or backward direction, and at least one fan supporting member for supporting the spiral fan and the motor in the casing.

The fan supporting member includes a first supporting member for rotatably supporting the front end of the rotation axis protruded from the front end of the spiral fan, and a second supporting member for supporting the motor in the rear end of the spiral fan. The first supporting member includes a bearing unit which the front end of the rotation axis is rotatably coupled to, a plurality of supporting bars externally extended from the bearing unit, and fixing units fixedly formed in the outside ends of the supporting bars, and fixed to the inner walls of the casing, and the second supporting member includes a motor mounting unit which the rear end of the motor is fixed to, a plurality of supporting bars externally extended from the motor mounting unit, and fixing units fixedly formed in the outside ends of the supporting bars, and fixed to the inner walls of the casing.

According to yet another aspect of the invention, each of the first and second air blowing means further includes a fan housing installed to surround the blades of the spiral fan, for guiding air flow.

Here, extended units having their diameter increased from the middle part to the front end and the rear end of the fan housing are formed in the fan housing, the middle part of the fan housing between the extended units is formed in the straight line shape, and the fan housing is symmetrically divided into first and second fan housings from the spiral fan.

According to yet another aspect of the invention, the front end of the motor is inserted into the hub of the spiral fan to restrict air flow resistance and reduce an installation space.

According to yet another aspect of the invention, a checking hole is formed on the casing so that the heat exchanger can be connected or disconnected to/from the casing.

The heat exchanger is installed in the casing to be level with one surface of the casing where the indoor air suction hole and the outdoor air discharge hole have been formed, and the checking hole is formed on one side surface of the casing vertical to one surface where the indoor air suction hole and the outdoor air discharge hole have been formed.

The ventilator further includes an indoor air passage guide installed in one side of the casing where the indoor air suction hole has been formed from the heat exchanger, for guiding indoor air or outdoor air along the first passages of the heat exchanger, and an outdoor air passage guide installed in the other side of the casing where the outdoor air suction hole has been formed from the heat exchanger, for guiding indoor air or outdoor air along the second passages of the heat exchanger. Guide protrusions are formed long in the length direction in both ends of the heat exchanger, and guide grooves are formed long in the length direction in the ends of the indoor air passage guide and the outdoor air passage guide, so that the guide protrusions of the heat exchanger can be slidably inserted into the guide grooves.

Here, the ventilator further includes a filter installed between the end of the outdoor air passage guide and the second passages of the heat exchanger, for filtering dust of outdoor air.

According to yet another aspect of the invention, a first bypass damper for opening the passages between the indoor air suction hole and the indoor air discharge hole is installed to be opened or closed between the heat exchanger and the casing. When the spiral fan of the first air blowing means is rotated to suck indoor air, the open/close status of the first bypass damper is controlled.

According to yet another aspect of the invention, a second bypass damper for opening the passages between the outdoor air suction hole and the outdoor air discharge hole is installed to be opened or closed between the heat exchanger and the casing. When the spiral fan of the second air blowing means is rotated to suck indoor air, the open/close status of the second bypass damper is controlled.

On the other hand, the heat exchanger is installed vertically to one surface of the casing where the indoor air suction hole and the outdoor air discharge hole have been formed, and the checking hole is formed on the bottom surface of the casing.

The ventilator further includes an indoor air passage guide installed in one side of the casing where the indoor air suction hole has been formed from the heat exchanger, for guiding indoor air or outdoor air along the first passages of the heat exchanger, a nd an outdoor a ir passage guide installed in the other side of the casing where the outdoor air discharge hole has been formed from the heat exchanger, for guiding indoor air or outdoor air along the second passages of the heat exchanger.

Here, guide protrusions are formed long in the height direction in the front and rear ends of the heat exchanger, and guide grooves are formed long in the height direction on one surface of the casing between the indoor air suction hole and the outdoor air discharge hole and on a partition installed between the first and second air blowing means, so that the guide protrusions can be slidably inserted into the guide grooves. Sealing guide protrusions are formed long in the length direction in both ends of the heat exchanger to contact the indoor air passage guide and the outdoor air passage guide, and sealing elastic members protruded long in the length direction are fixed to the ends of the indoor air passage guide and the outdoor air passage guide, so that the sealing guide protrusions can be closely adhered to the sealing elastic members.

The ventilator further includes a filter installed between the end of the outdoor air passage guide and the second passages of the heat exchanger, for filtering dust of outdoor air.

### BRIEF DESCRIPTION OF THE DRAWINGS

The present invention will become better understood with reference to the accompanying drawings which are given only by way of illustration and thus are not limitative of the present invention, wherein:

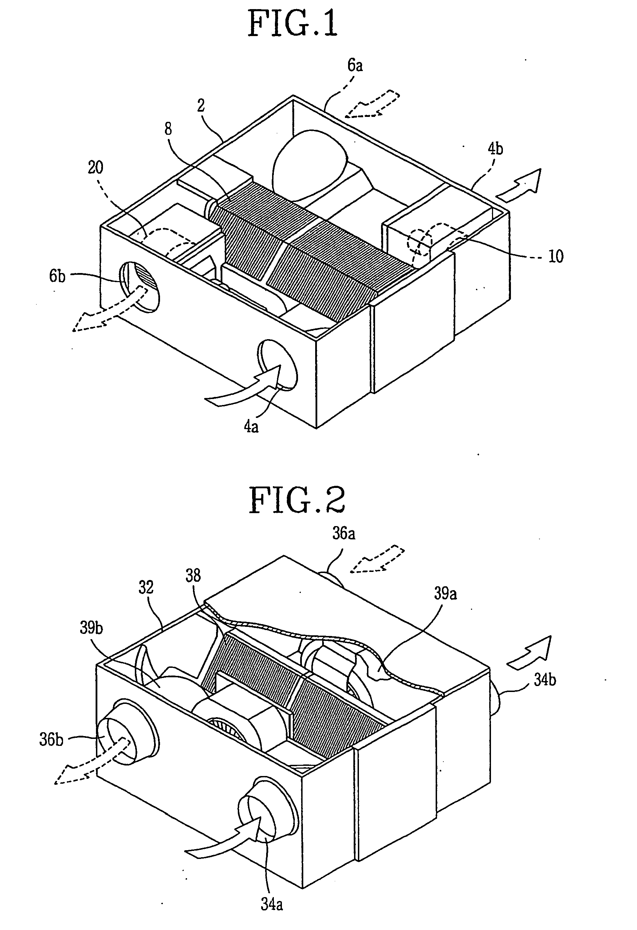

Fig. 1 is a perspective view illustrating one example of a conventional ventilator;
Fig. 2 is a perspective view illustrating another example of the conventional ventilator;

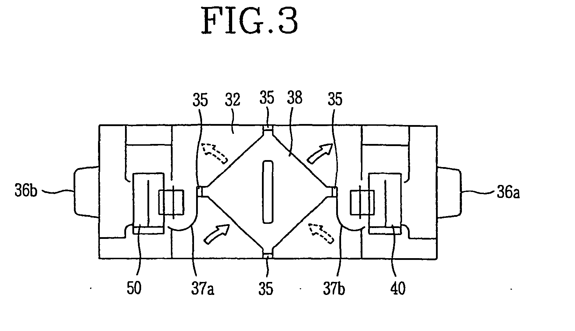

Fig. 3 is a cross-sectional view illustrating another example of the conventional ventilator;
Fig. 4 is a perspective view illustrating a ventilator in accordance with a first embodiment of the present invention;
Fig. 5 is a plan view illustrating the ventilator in accordance with the first embodiment of the present invention;
Fig. 6 is a cross-sectional view taken along line A-A of Fig. 5;
Fig. 7 is a cross-sectional view taken along line B-B of Fig. 5;
Fig. 8 is a perspective view illustrating disassembly of an air blowing means of the ventilator in accordance with the present invention;
Fig. 9 is a perspective view illustrating a ventilator in accordance with a second embodiment of the present invention;
Fig. 10 is a plan view illustrating the ventilator in accordance with the second embodiment of the present invention;
Fig. 11 is a cross-sectional view taken along line C-C of Fig. 10; and
Fig. 12 is a cross-sectional view taken along line D-D of Fig. 10.

### BEST MODE FOR CARRYING OUT THE INVENTION

Preferred embodiments of the present invention will now be described in detail with reference to the accompanying drawings.

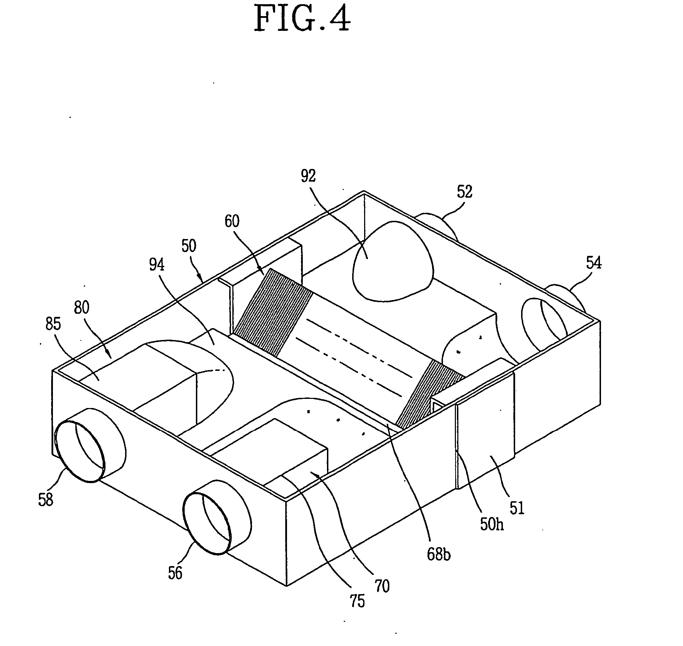

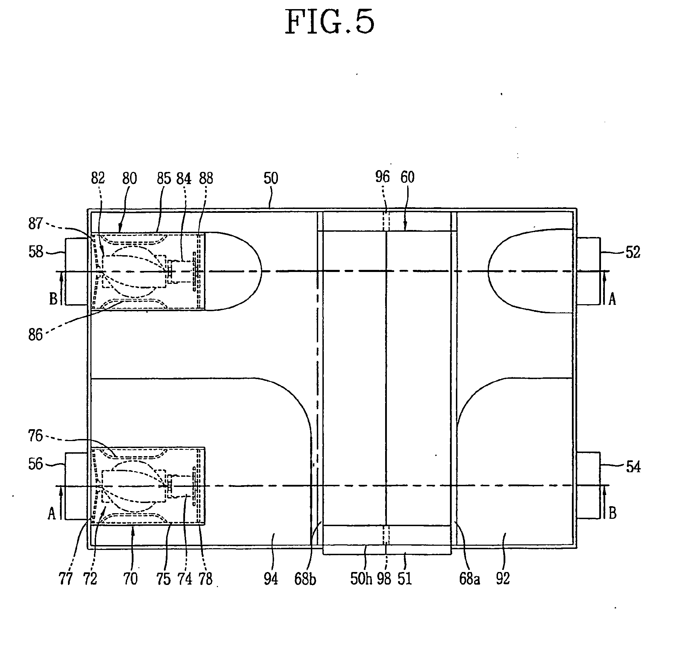

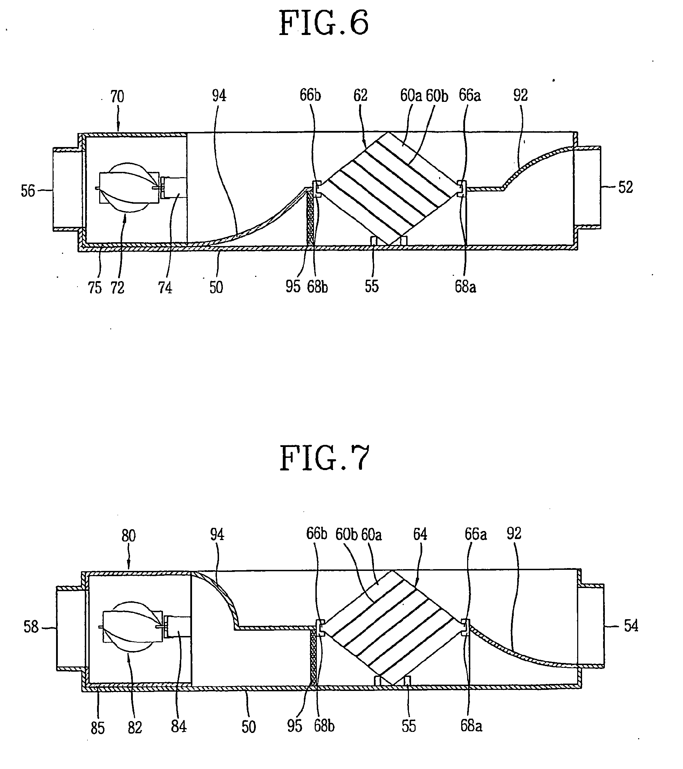

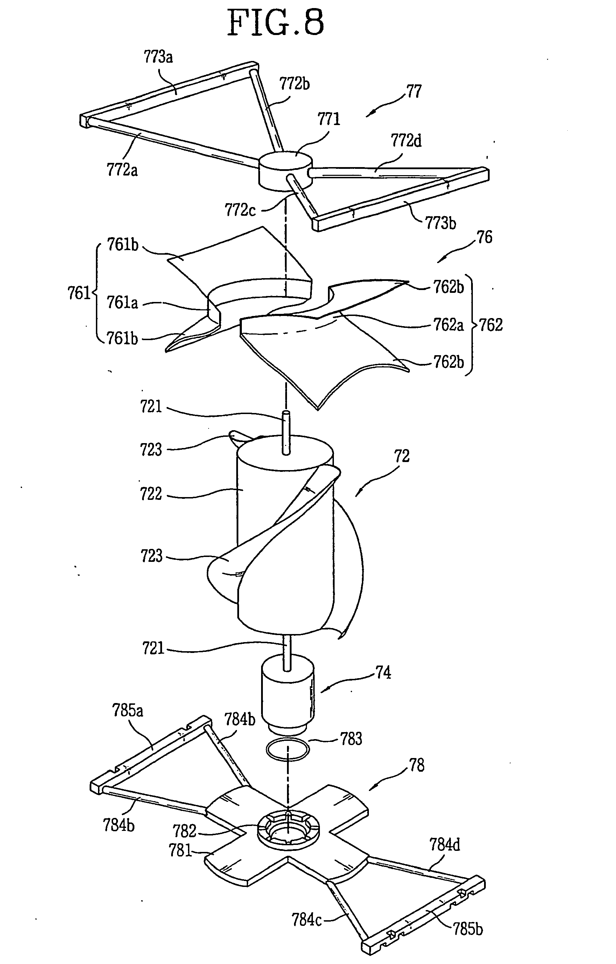

Figs 4 and 5 are a perspective view and a plan view illustrating a ventilator in accordance with a first embodiment of the present invention, Figs. 6 and 7 are cross-sectional views taken a long lines A-A a nd B-B of Fig. 5, and Fig. 8 is a perspective view illustrating disassembly of an air blowing means of the ventilator in accordance with the present invention.

Referring to Figs. 4 to 7, the ventilator of the first embodiment includes a casing 50 having an indoor air suction hole 52 and an outdoor air discharge hole 54 connected to the indoor side by ducts on its one surface, and an indoor air discharge hole 56 and an outdoor air suction hole 58 connected to the outdoor side by ducts on the facing surface to the surface where the indoor air suction hole 52 and the outdoor air discharge hole 54 have been formed, passages for flowing indoor air and passages for flowing outdoor air being formed inside the casing 50, a heat exchanger 60 installed to cross the center of the casing 50, for exchanging heat between indoor air and outdoor air, a first air blowing means 70 installed inside the indoor air discharge hole 56, for discharging indoor air or sucking outdoor air according to the rotation direction of a spiral fan 72, and a second air blowing means 80 installed inside the outdoor air suction hole 58, for discharging outdoor air or sucking indoor air according to the rotation direction of a spiral fan 82.

The casing 50 is formed in the rectangular shape. The indoor air suction hole 52 and the outdoor air discharge hole 54 are formed on one surface of the casing 50 side by side, and the indoor air discharge hole 56 and the outdoor air suction hole 58 are formed on the facing surface of the casing 50 side by side. The heat exchanger 60 is installed to cross the casing 50, and level with one surface of the casing 50 where the indoor air suction hole 52 and the outdoor air discharge hole 54 have been formed.

The indoor air suction hole 52 and the outdoor air suction hole 58 can be formed on one surface of the casing 50, and the outdoor air discharge hole 54 and the indoor air discharge hole 56 can be formed on the facing surface thereof.

Here, the heat exchanger 60 is installed by stacking first and second heat exchange units 62 and 64 to form first and second passages for separately flowing indoor air and outdoor air. The first and second heat exchange units 62 and 64 are formed by installing a plurality of guide ribs 60b on one side surfaces of rectangular or hexagonal thin heat exchange films 60a. The first and second passages for guiding indoor air or outdoor air are determined according to installation directions of the guide ribs 60b.

A checking hole 50h is formed on one side surface of the casing 50, namely one side surface vertical to one surface of the casing where the indoor air suction hole 52 and the outdoor air discharge hole 54 have been formed to connect or disconnect the heat exchanger 60, and a checking cover 51 is installed to be opened or closed on the checking hole 50h. Guide grooves 55 are formed long in the width direction on the top and bottom surfaces of the casing 50 inside the checking hole 50h, so that the top and bottom ends of the heat exchanger 60 can be slidably inserted into the guide grooves 55. Accordingly, the heat exchanger 60 can be slidably connected or disconnected to/from the casing 50.

The ventilator further includes an indoor air passage guide 92 installed in one side of the casing 50 where the indoor air suction hole 52 and the outdoor air discharge hole 54 have been formed from the heat exchanger 60, for guiding indoor air sucked from the indoor air suction hole 52 to the bottom of one side surface of the heat exchanger 60, and an outdoor air passage guide 94 installed in the other side of the casing 50 where the indoor air discharge hole 56 and the outdoor air suction hole 58 have been formed from the heat exchanger 60, for guiding outdoor air sucked from the outdoor air suction hole 58 to the bottom of the other side surface of the heat exchanger 60.

The indoor air passage guide 92 is upwardly protruded to guide indoor air sucked from the indoor air suction hole 52 to the bottom of one side surface of the heat exchanger 60, and downwardly protruded to guide outdoor air discharged to the top of one side surface of the heat exchanger 60 to the outdoor air discharge hole 54. A guide groove 68a is formed long in the length direction in the end of the indoor air passage guide 92, so that a guide protrusion 66a formed long in the length direction on one side surface of the heat exchanger 60 can be slidably inserted into the guide groove 68a.

Identical to the indoor air passage guide 92, the outdoor air passage guide 94 is upwardly protruded to guide outdoor air sucked from the outdoor air suction hole 58 to the bottom of the other s ide surface of the heat exchanger 60, and downwardly protruded to guide indoor air discharged to the top of the other side surface of the heat exchanger 60 to the indoor air discharge hole 56. A guide groove 68b is formed long in the length direction in the end of the outdoor a ir passage guide 94, so that a guide protrusion 66b formed long in the length direction on the other side surface of the heat exchanger 60 can be slidably inserted into the guide groove 68b.

A filter 95 for filtering alien substances such as dust of outdoor air guided by the outdoor air passage guide 94 is installed in the end of the outdoor air passage guide 94. The filter 95 is positioned over the whole bottom of the other side surface of the heat exchanger 60.

The first air blowing means 70 is installed inside the indoor air discharge hole 56, discharges indoor air when the built-in spiral fan 72 is rotated in the forward direction, and sucks outdoor air when the spiral fan 72 is rotated in the backward direction, and the second air blowing means 80 is installed inside the outdoor a ir suction hole 58, sucks outdoor air when the built-in spiral fan 82 is rotated in the forward direction, and discharges indoor air when the spiral fan 82 is rotated in the backward direction.

The first air blowing means 70 can be installed inside the indoor air suction hole 52, and the second air blowing means 80 can be installed inside the outdoor air discharge hole 54. However, the indoor air suction hole 52 and the outdoor air discharge hole 54 a re connected to indoor side ducts, and thus vibrations a nd noises generated in the first and second air blowing means 70 and 80 are easily transmitted thereto. Preferably, the first and second air blowing means 70 and 80 are installed inside the indoor air discharge hole 56 and the outdoor air suction hole 58.

Therefore, when an outdoor air suction amount must increase according to the using environment, the spiral fan 72 of the first air blowing means 70 is rotated in the backward direction, and the spiral fan 82 of the second air blowing means 80 is rotated in the forward direction, to suck outdoor air from the indoor air discharge hole 56 and the outdoor air suction hole 58, and when an indoor air discharge amount must increase according to the using environment, the spiral fan 72 of the first air blowing means 70 is rotated in the forward direction, and the spiral fan 82 of the second air blowing means 80 is rotated in the backward direction, to discharge indoor air to the indoor air suction hole 52 and the outdoor air discharge hole 56.

The spiral fan 72 of the first air blowing means 70 and the spiral fan 82 of the second air blowing means 80 can be rotated in the forward direction, to discharge indoor air and suck outdoor air at the same time. In addition, the spiral fan 72 of the first air blowing means 70 and the spiral fan 82 of the second air blowing means 80 can be rotated in the backward direction, to suck outdoor air and discharge indoor air at the same time.

In the case that the spiral fan 72 of the first air blowing means 70 is rotated in the forward direction to discharge indoor air, a first bypass damper 96 is installed between one end of the heat exchanger 60 and the casing 50 to open or close the passages, so that indoor air sucked from the indoor air suction hole 52 can be discharged to the indoor air discharge hole 56 not via the heat exchanger 60. When the spiral fan 72 of the first air blowing means 70 is operated to suck indoor air, the open/close status of the first bypass damper 96 is controlled.

When the spiral fan 82 of the second air blowing means 80 is rotated in the backward direction to discharge indoor air, a second bypass damper 98 is installed between the other end of the heat exchanger 60 and the casing 50 to open or close the passages, so that indoor air sucked from the outdoor air discharge hole 54 can be discharged to the outdoor air suction hole 58 not via the heat exchanger 60. When the spiral fan 82 of the second air blowing means 80 is operated to suck indoor air, the open/close status of the second bypass damper 98 is controlled.

On the other hand, the first and second air blowing means 70 and 80 include spiral fans 72 and 82 for forcibly sucking air and discharging sucked air in the axial direction, motors 74 and 84 for driving the spiral fans 72 and 82 in the forward or backward direction, fan housings 76 and 86 installed separately from the circumferences of the spiral fans 72 and 82, for guiding air flow, and supporting members 77, 78, 87.and 88 for rotatably fixing the spiral fans 72 and 82 and the motors 74 and 84 to the indoor air discharge hole 56 or the outdoor air suction hole 58 of the casing 50.

The structure of the first air blowing means 70 w ill now be explained i n detail with reference to Fig. 8. The spiral fan 72 which is also called Yin-Yang fan includes a rotation axis 721' vertically coupled to the motor 74 and rotated, a long cylindrical hub 722 fixedly coupled to the rotation axis 721, and a pair of blades 723 spirally twisted in the axial direction from the front end to the rear end of the hub 722 on the outer circumference of the hub 722. Each of the blades 723 has a constant width from the front end to the rear end of the hub 722.

Here, the two blades 723 are formed in the facing positions, namely 180° separated positions, but more blades can be formed at regular intervals.

In addition, the angle of twisting the blades 723 from the front end to the rear end of the hub 722 is not limited, but the spiral fan 72 is formed at an angle equal to or smaller than 180° in the axial direction of the hub 722 to prevent overlapping.

Because the blades 723 of the spiral fan 72 are spirally twisted in the vertical axial direction, when the spiral fan 72 is rotated in the forward direction, air passes through the spiral fan 72 in the axial direction along the surfaces of the blades 723, and when the spiral fan 72 is rotated in the backward direction, air passes through the spiral fan 72 in the facing direction. Here, air flow and air pressure are almost identical in the same external conditions.

The motor 74 is connected to the rotation axis 721 positioned in the bottom side of the hub 722, for rotating the spiral fan 72 in the forward or backward direction. Here, the motor 74 is inserted into the hub 722, to reduce the whole fan size and flow resistance.

The fan housing 76 is formed in the cylindrical shape having its top and bottom ends opened, and installed outside the spiral fan 72 to surround the spiral fan 72. When air is blown by rotation of the spiral fan 72, the fan housing 76 is operated as a path for increasing a constant pressure and maintaining constant air flow.

The fan housing 76 can be incorporated or divided into a first fan housing 761 and a second fan housing 762 symmetric from the rotation axis 721.

In the first and second fan housings 761 and 762, the middle parts 761 a and 762a are formed approximately in the straight line shape, and the front end and the rear end for sucking and discharging air compose extended units 761 b and 762b gradually externally extended. Each of the extended units 761 b and 762b is curved in a predetermined curvature. Preferably, the first and second fan housings 761 and 762 have higher radius of curvature in the inlet sides for sucking air than the outlet sides for discharging air.

Each edge of the front end and the rear end of the first and second fan housings 761 and 762 is adjacent to the inner walls of the casing 50. Fixing members 75 can be installed to fix the first and second fan housings 761 and 762 to the casing 50.

The supporting member includes a first supporting member 77 for rotatably supporting the rotation axis 721 protruded from the front end of the spiral fan 72, and a second supporting member 78 for supporting the motor 74 in the rear end of the spiral fan 72.

Here, the first supporting member 77 is comprised of a bearing unit 771 for rotatably supporting the front end of the rotation axis 721, four supporting bars 772a~772d externally extended from both sides of the bearing unit 7 71, a first fixing bracket 773a formed to connect the outside ends of the two supporting bars 772a and 772b in one side, and fixed to the inner wall of the casing 50, and a second fixing bracket 773b formed to connect the outside ends of the two supporting bars 772c and 772d in the facing side to the first fixing bracket 773a, and fixed to the inner wall of the casing 50. The bearing unit 771, the two supporting bars 772a and 772b or 772c and 772d, and the fixing bracket 773a or 773b for connecting the supporting bars form a triangle when seen from the front or rear end.

In order to smoothly rotate the spiral fan 72, bearings (not shown) can be installed in the bearing unit 771, or the bearing unit 771 can be made of a magnetic lubricating material of high lubrication.

Preferably, each supporting bar 772a~772d of the first supporting member 77 is upwardly inclined from the bearing unit 771 to the outside, to reduce noises when air is discharged through the spiral fan 72.

That is, when air from the spiral fan 72 passes through the supporting bars 772a~772d of the upper supporting member 77, vortexes are generated. Such vortexes generate frequencies. If the supporting bars 772a~772d are formed in the same height, the same frequencies are generated by the vortexes in every point of the supporting bars 772a~772d, which amplifies noises.

However, as described above, when the supporting bars 772a~772d are inclined, different frequencies are generated by the vortexes in each point of the supporting bars 772a-772d, thereby reducing noises.

The first and second fixing brackets 773a and 773b of the first supporting member 77 can be directly fixed to the inner walls of the casing 50 by using fastening means such as bolts and nuts, or the first supporting member 77 can be fixed to the inner walls of the casing 50 by using special supporting members 75.

The second supporting member 78 includes a motor mounting unit 781 having a concave motor fixing groove 782 in its center so that the rear end of the motor 74 can be inserted into the groove 782, four supporting bars 784a~784d extended from both ends of the motor mounting unit 781 as in the first supporting member 77, and first and second fixing brackets 785a and 785b for respectively connecting the outside ends of the supporting bars 784a~784d.

Identically to the first supporting member 77, the motor mounting unit 781, the two supporting bars 784a and 784b or 784c and 784d and the fixing bracket 785a or 785b of the second supporting member 78 form a triangle when seen from the front or rear end.

Preferably, a vibration adsorbing packing member 783 which is made of flexible resin or synthetic resin and which the rear end of the motor 74 is inserted into is installed on the inner circumference of the motor fixing groove 782 in order to reduce vibrations when the motor 74 is driven.

The second air blowing means 80 is formed in the same manner as the first air blowing means 70.

Accordingly, when the spiral f an 7 2 of the first air blowing means 7 0 is rotated in the forward direction, indoor air sucked from the indoor air suction hole 52 exchanges heat with outdoor air through the heat exchanger 60, and is discharged to the indoor air discharge hole 56, and when the spiral fan 82 of the second air blowing means 80 is rotated in the forward direction, outdoor air sucked from the outdoor air suction hole 58 is filtered by the filter 95 to remove alien substances such as dust, exchanges heat with indoor air through the heat exchanger 60, and is discharged to the outdoor air discharge hole 54.

Here, when the first bypass damper 96 is opened, indoor air sucked from the indoor air suction hole 52 can be discharged to the indoor air discharge hole 56 not via the heat exchanger 60.

On the other hand, when the spiral fan 72 of the first air blowing means 70 is rotated in the backward direction and the spiral fan 82 of the second air blowing means 80 is rotated in the forward direction, outdoor air is sucked from the indoor air discharge hole 56 and the outdoor air suction hole 58 at the same time, and discharged to the indoor air suction hole 52 and the outdoor air discharge hole 54, to increase the outdoor air suction amount.

Here, air sucked from the indoor air discharge hole 56 and the outdoor air suction hole 58 is filtered by the filter 95 to remove alien substances such as dust, and sucked to the indoor side.

In addition, when the spiral fan 72 of the first air blowing means 70 is rotated in the forward direction and the spiral fan 8 2 of the second a ir blowing means 80 is rotated in the backward direction, indoor air is sucked from the indoor air suction hole 52 and the outdoor air discharge hole 54 at the same time, and discharged to the indoor air discharge hole 56 and the outdoor air suction hole 58, to increase the indoor air discharge amount.

In the case that the first bypass damper 96 and the second bypass damper 98 are simultaneously opened, indoor air sucked from the indoor air suction hole 52 and the outdoor air discharge hole 54 can be discharged to the indoor air discharge hole 56 and the outdoor air suction hole 58 not via the heat exchanger 60.

When the ventilator is operated, alien substances such as dust filtered by the filter 95 are automatically discharged with indoor air to the indoor air discharge hole 56 and the outdoor air suction hole 58. Therefore, the filter 95 needs not to be cleaned.

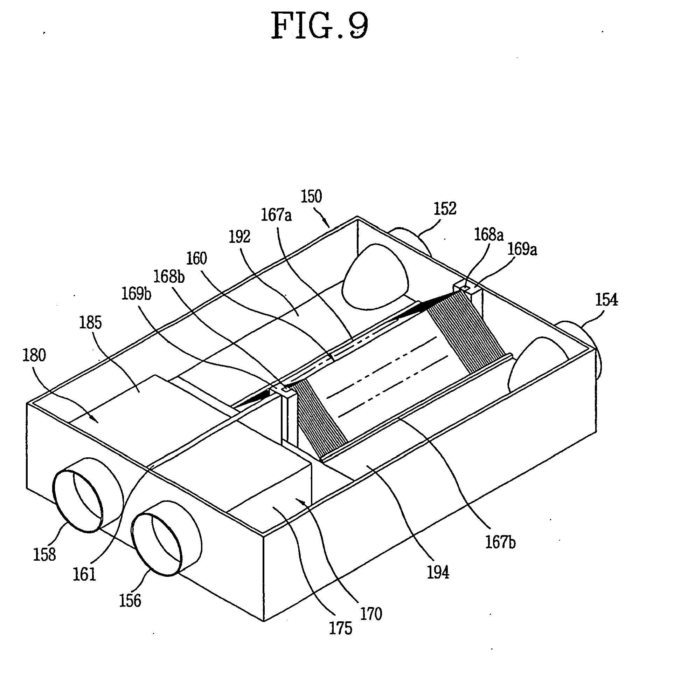

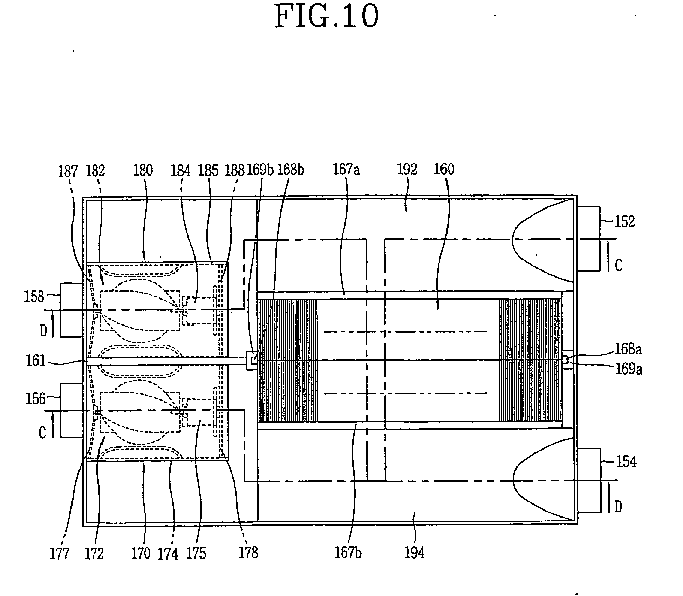

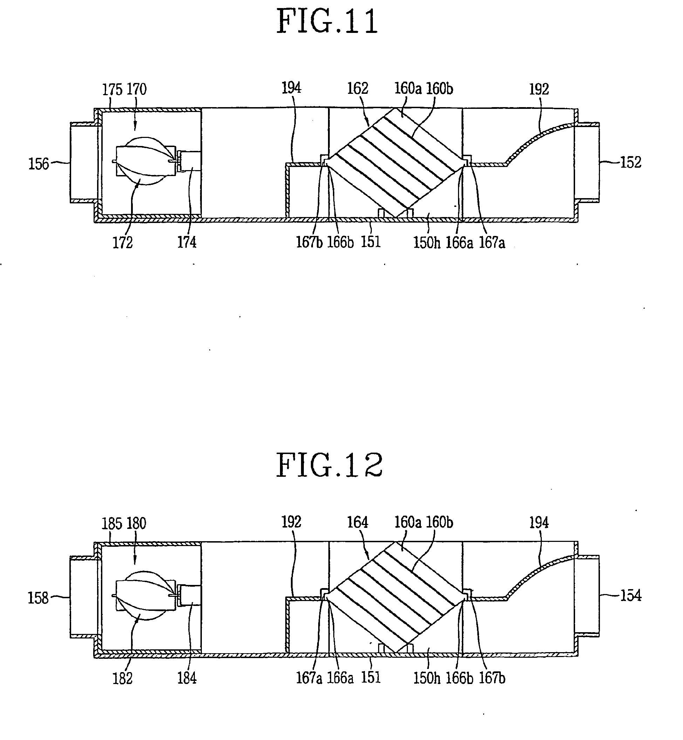

Figs. 9 and 10 are a perspective view and a plan view illustrating a ventilator in accordance with a second embodiment of the present invention, and Figs. 11 and 12 are cross-sectional views taken along lines C-C and D-D of Fig. 10.

As illustrated in Figs. 9 to 12, in the ventilator of the second embodiment, an indoor air suction hole 152 and an outdoor air discharge hole 154 connected to the indoor side by ducts are formed on one surface of a rectangular casing 150, an indoor air discharge hole 156 and an outdoor air suction hole 158 connected to the outdoor side by ducts are formed on the facing surface of the casing 150, and a heat exchanger 160 for forming passages for separately flowing outdoor air and indoor air in the casing 150, and exchanging heat between outdoor air and indoor air is installed vertically to one surface of the casing 150 where the indoor air suction hole 152 and the outdoor air discharge hole 154 have been formed. A checking hole 150h is formed on the bottom surface of the casing 150 to connect or disconnect the heat exchanger 160, and a checking cover 151 is installed to be connected or disconnected to/from the checking hole 150h.

A first air blowing means 170 for discharging indoor air or sucking outdoor air is formed inside the indoor air discharge hole 156, and a second air blowing means 180 for sucking outdoor air or discharging indoor air is formed inside the outdoor air suction hole 158. A partition 161 is formed between the first and second air blowing means 170 and 180 to partition outdoor air or indoor air.

An indoor air passage guide 192 for guiding indoor air or outdoor air to first passages of the heat exchanger 160 is installed in one side of the casing 150 where the indoor air suction hole 152 has been formed from the heat exchanger 160, and an outdoor air passage guide 194 for guiding indoor air or outdoor air to second passages of the heat exchanger 160 is installed in the other side of the casing 150 where the outdoor air discharge hole 154 has been formed. A filter (not shown) for filtering dust of outdoor air is installed between the end of the outdoor air passage guide 194 and the second passages of the heat exchanger 160.

As described in the first embodiment of the present invention, the heat exchanger 160 is installed by stacking first and second heat exchange units 162 and 164 for separately flowing indoor air and outdoor air. The first and second heat exchange units 162 and 164 are formed by installing a plurality of guide ribs 160b on one side surfaces of rectangular or hexagonal thin heat exchange films 160a. The first and second heat exchange units 162 and 164 are distinguished according to installation directions of the guide ribs 160b.

Especially, sealing guide protrusions 166a and 166b are formed long in the length direction in both ends of the heat exchanger 160, and sealing elastic members 167a and 167b which the sealing guide protrusions 166a and 166b are closely adhered to are installed in the ends of the indoor air passage guide 192 and the outdoor air passage guide 194 to partition indoor air or outdoor air.

Guide protrusions 168a and 168b are formed long in the height direction in the front and rear ends of the heat exchanger 160, and guide grooves 169a and 169b are formed long in the height direction on one surface of the casing 150 between the indoor air suction hole 152 and the outdoor air discharge hole 154 and on the partition 161 installed between the first and second air blowing means 170 and 180, so that the guide protrusions 168a and 168b can be slidably inserted into the guide grooves 169a and 169b.

When the heat exchanger 160 is installed in the upward direction through the checking hole 150h formed on the bottom surface of the casing 150, the guide protrusions 168a and 168b of the heat exchanger 160 are slidably inserted into the guide grooves 169a and 169b, and when the heat exchanger 160 is completely inserted into the casing 150, the sealing guide protrusions 166a and 166b of the heat exchanger 160 are closely adhered to the sealing elastic members 167a and 167b. Here, the heat exchanger 160 can be fixed by using a special fixing means, or supported by fixing the checking cover 151 to the checking hole 150h.

On the other hand, the first and second air blowing means 170 and 180 are fixed in fan housings 175 and 185, and include spiral fans 172 and 182 for sucking and discharging air in the axial direction, a pair of blades being spirally installed on the outer circumferences of hubs, motors 174 and 184 for driving the spiral fans 172 and 182 in the forward or reverse direction, and first and second supporting members 177, 178, 187 and 188 for respectively fixing the front ends of the spiral fans 172 and 182 and the rear ends of the motors 174 and 184 to the fan housings 175 and 185 or the inside of the casing 150. That is, the first and second air blowing means 170 and 180 are formed as described in the first embodiment of the invention.

Accordingly, the ventilator of the second embodiment is operated in the same manner as the ventilator of the first embodiment. When the spiral fan 172 of the first air blowing means 170 is rotated in the forward direction and the spiral fan 182 of the second air blowing means 180 is rotated in the forward direction, indoor air sucked from the indoor air suction hole 152 and outdoor air sucked from the outdoor air suction hole 158 exchange heat through the heat exchanger 160, and are discharged to the indoor air discharge hole 156 and the outdoor air discharge hole 154, respectively.

Here, outdoor air sucked from the outdoor air suction hole 158 is filtered by the filter to remove alien substances such as dust, and sucked to the heat exchanger 160.

When the spiral fan 172 of the first air blowing means 170 is rotated in the backward direction and the spiral fan 182 of the first air blowing means 180 is rotated in the forward direction, outdoor air is sucked from the indoor air discharge hole 156 and the outdoor air suction hole 158 at the same time, and discharged to the indoor air suction hole 152 and the outdoor air discharge hole 154, to increase the outdoor air suction amount.

Here, air sucked from the indoor air discharge hole 156 and the outdoor air suction hole 158 is filtered by the filter to remove alien substances such as dust, and sucked to the indoor side.

In addition, when the spiral fan 172 of the first air blowing means 170 is rotated-in the forward direction and the spiral fan 182 of the second air blowing means 180 is rotated in the backward direction, indoor air is sucked from the indoor air suction hole 152 and the outdoor air discharge hole 154 at the same time, and discharged to the indoor air discharge hole 156 and the outdoor air suction hole 158, to increase the indoor air discharge amount.

Alien substances such as dust filtered by the filter are automatically discharged with indoor air to the indoor air discharge hole 156 and the outdoor air suction hole 158. Therefore, the user does not have to clean the filter.

The ventilator has been explained in detail on the basis of the embodiments and accompanying drawings of the present invention. However, it is understood that the present invention should not be limited to these preferred embodiments but various changes and modifications can be made by one skilled in the art within the scope of the present invention as hereinafter claimed.

## Claims

1. A ventilator, comprising:
a casing having an indoor air suction hole and an outdoor air discharge hole connected to the indoor side, and an indoor air discharge hole and an outdoor air suction hole connected to the outdoor side;
a heat exchanger installed in the casing, for forming first and second passages for separately flowing indoor air and outdoor air, and exchanging heat between indoor air and outdoor air;
a first air blowing means installed on passages formed between the indoor air suction hole and the indoor air discharge hole, for discharging indoor air or alternatively sucking outdoor air according to the rotation direction; and
a second air blowing means installed on passages formed between the outdoor air suction hole and the outdoor air discharge hole, for sucking outdoor air or alternatively discharging indoor air according to the rotation direction.

2. The ventilator of claim 1, wherein each of the first and second air blowing means comprises a spiral fan rotated in the forward or backward direction, for forcibly flowing air in the axial direction or alternatively facing direction.

3. The ventilator of claim 2, wherein the first air blowing means is installed inside the indoor air discharge hole.

4. The ventilator of claim 2, wherein the second air blowing means is installed inside the outdoor air suction hole.

5. The ventilator of claim 2, wherein the spiral fan comprises a cylindrical hub, and spiral blades being spirally twisted from one end to the other end of the hub on the outer circumference of the hub, and having a predetermined width in the axial direction.

6. The ventilator of claim 5, wherein each of the first and second air blowing means further comprises a motor which a rotation axis protruded from the rear end of the spiral fan is coupled to, the motor rotating the rotation axis in the forward or backward direction, and at least one fan supporting member for supporting the spiral fan and the motor in the casing.

7. The ventilator of claim 6, wherein the fan supporting member comprises a first supporting member for rotatably supporting the front end of the rotation axis protruded from the front end of the spiral fan, and a second supporting member for supporting the motor in the rear end of the spiral fan.

8. The ventilator of claim 7, wherein the first supporting member comprises a bearing unit which the front end of the rotation axis is rotatably coupled to, a plurality of supporting bars externally extended from the bearing unit, and fixing units fixedly formed in the outside ends of the supporting bars, and fixed to the inner walls of the casing.

9. The ventilator of claim 7, wherein the second supporting member comprises a motor mounting unit which the rear end of the motor is fixed to, a plurality of supporting bars externally extended from the motor mounting unit, and fixing units fixedly formed in the outside ends of the supporting bars, and fixed to the inner walls of the casing.

10. The ventilator of claim 6, wherein each of the first and second air blowing means further comprises a fan housing installed to surround the blades of the spiral fan, for guiding air flow.

11. The ventilator of claim 10, wherein extended units having their diameter increased from the middle part to the front end and the rear end of the fan housing are formed in the fan housing.

12. The ventilator of claim 11, wherein the middle part of the fan housing between the extended units is formed in the straight line shape.

13. The ventilator of claim 10 or 11, wherein the fan housing is symmetrically divided into first and second fan housings from the spiral fan.

14. The ventilator of claim 6, wherein the front end of the motor is inserted into the hub of the spiral fan.

15. The ventilator of claim 2, wherein a checking hole is formed on the casing so that the heat exchanger can be connected or disconnected to/from the casing.

16. The ventilator of claim 15, wherein the heat exchanger is installed in the casing to be level with one surface of the casing where the indoor air suction hole and the outdoor air discharge hole have been formed, and the checking hole is formed on one side surface of the casing vertical to one surface where the indoor air suction hole and the outdoor air discharge hole have been formed.

17. The ventilator of claim 16, further comprising an indoor air passage guide installed in one side of the casing where the indoor air suction hole has been formed from the heat exchanger, for guiding indoor air or outdoor air along the first passages of the heat exchanger.

18. The ventilator of claim 17, further comprising an outdoor air passage guide installed in the other side of the casing where the outdoor air suction hole has been formed from the heat exchanger, for guiding indoor air or outdoor air along the second passages of the heat exchanger.

19. The ventilator of claim 18, wherein guide protrusions are formed long in the length direction in both ends of the heat exchanger, and guide grooves are formed long in the length direction in the ends of the indoor air passage guide and the outdoor air passage guide, so that the guide protrusions of the heat exchanger can be slidably inserted into the guide grooves.

20. The ventilator of claim 18, further comprising a filter installed between the end of the outdoor air passage guide and the second passages of the heat exchanger, for filtering dust of outdoor air.

21. The ventilator of claim 16, wherein a first bypass damper for opening the passages between the indoor air suction hole and the indoor air discharge hole is installed to be opened or closed between the heat exchanger and the casing.

22. The ventilator of claim 21, wherein, when the spiral fan of the first air blowing means is rotated to suck indoor air, the open/close status of the first bypass damper is controlled.

23. The ventilator of claim 16, wherein a second bypass damper for opening the passages between the outdoor air suction hole and the outdoor air discharge hole is installed to be opened or closed between the heat exchanger and the casing.

24. The ventilator of claim 23, wherein, when the spiral fan of the second air blowing means is rotated to suck indoor air, the open/close status of the second bypass damper is controlled.

25. The ventilator of claim 15, wherein the heat exchanger is installed vertically to one surface of the casing where the indoor air suction hole and the outdoor air discharge hole have been formed, and the checking hole is formed on the bottom surface of the casing.

26. The ventilator of claim 25, further comprising an indoor air passage guide installed in one side of the casing where the indoor air suction hole has been formed from the heat exchanger, for guiding indoor air or outdoor air along the first passages of the heat exchanger.

27. The ventilator of claim 26, further comprising an outdoor air passage guide installed in the other side of the casing where the outdoor air discharge hole has been formed from the heat exchanger, for guiding indoor air or outdoor air along the second passages of the heat exchanger.

28. The ventilator of claim 27, wherein guide protrusions are formed long in the height direction in the front and rear ends of the heat exchanger, and guide grooves are formed long in the height direction on one surface of the casing between the indoor air suction hole and the outdoor air discharge hole and on a partition installed between the first and second air blowing means, so that the guide protrusions can be slidably inserted into the guide grooves.

29. The ventilator of claim 28, wherein sealing guide protrusions are formed long in the length direction in both ends of the heat exchanger to contact the indoor air passage guide and the outdoor air passage guide, and sealing elastic members protruded long in the length direction are fixed to the ends of the indoor air passage guide and the outdoor air passage guide, so that the sealing guide protrusions can be closely adhered to the sealing elastic members.

30. The ventilator of claim 27, further comprising a filter installed between the end of the outdoor air passage guide and the second passages of the heat exchanger, for filtering dust of outdoor air.

## Patentansprüche

1. Ventilator mit:
- einem Gehäuse mit einer Innenluft-Ansaugöffnung und einer Außenluft-Auslassöffnung, welche mit der Innenraumseite verbunden sind, und eine Innenluft-Auslassöffnung und eine Außenluft-Ansaugöffnung, welche mit der Außenraumseite verbunden sind;
- einem in dem Gehäuse eingebauten Wärmetauscher zur Ausbildung erster und zweiter Durchlässe zum separaten Fließen von Innenluft und Außenluft und zum Austausch von Wärme zwischen Innenluft und Außenluft;
- einer ersten Luftgebläseeinrichtung, welche in Durchlässen, welche zwischen der Innenluft-Ansaugöffnung und der Innenluft-Auslassöffnung ausgebildet sind, eingebaut ist, zum Ablassen von Innenluft oder alternativ zum Ansaugen von Außenluft gemäß der Rotationsrichtung; und
- einer zweiten Luftgebläseeinrichtung, welche in Durchlässen, welche zwischen der Außenluft-Ansaugöffnung und der Außenluft-Auslassöffnung ausgebildet sind, eingebaut ist, zum Ansaugen von Außenluft oder alternativ zum Ablassen von Innenluft gemäß der Rotationsrichtung.

2. Ventilator nach Anspruch 1,
**dadurch gekennzeichnet,**
**dass** jede der ersten und zweiten Luftgebläseeinrichtungen ein spiralförmiges Lüfterrad aufweist, welches in der Vorwärts- oder Rückwärts-Richtung gedreht wird, um kraftbetrieben Luft in die axiale Richtung oder alternativ in die entgegengesetzte Richtung zu blasen.

3. Ventilator nach Anspruch 2,
**dadurch gekennzeichnet,**
**dass** die erste Luftgebläseeinrichtung im Inneren der Innenluft-Auslassöffnung eingebaut ist.

4. Ventilator nach Anspruch 2,
**dadurch gekennzeichnet,**
**dass** die zweite Luftgebläseeinrichtung im Inneren der Außenluft-Ansaugöffnung eingebaut ist.

5. Ventilator nach Anspruch 2,
**dadurch gekennzeichnet,**
**dass** das spiralförmige Lüfterrad eine zylindrische Nabe umfasst, wobei spiralförmige Blätter von einem Ende bis zum anderen Ende der Nabe auf der äußeren Kreislinie der Nabe spiralförmig verdrillt sind und eine vorgegebene Weite in der axialen Richtung besitzen.

6. Ventilator nach Anspruch 5,
**dadurch gekennzeichnet,**
**dass** jede der ersten und zweiten Luftgebläseeinrichtungen ferner einen Motor, an dem eine Rotationswelle angekoppelt ist, welche vom hinteren Ende des spiralförmigen Lüfterrades herausragt, wobei der Motor die Rotationswelle in der Vorwärts- oder Rückwärts-Richtung dreht, und mindestens ein das Lüfterrad stützendes Element zum Abstützen des spiralförmigen Lüfterrades und des Motors in dem Gehäuse umfasst.

7. Ventilator nach Anspruch 6,
**dadurch gekennzeichnet,**
**dass** das Lüfterrad stützende Element ein erstes stützendes Element zum drehbaren Abstützen des vorderen Endes der Drehachse, welche vom vorderen Ende des spiralförmigen Lüfterrades herausragt, und ein zweites unterstützendes Element zum Abstützen des Motors am hinteren Ende des spiralförmigen Lüfterrades umfasst.

8. Ventilator nach Anspruch 7,
**dadurch gekennzeichnet,**
**dass** das erste unterstützende Element eine Lager-Einheit, an die das vordere Ende der Rotationswelle drehbar gekoppelt ist, eine Vielzahl von Stützstangen, welche sich von der Lager-Einheit nach außen erstrecken, und Befestigungseinheiten, welche fest an den äußeren Enden der Stützstangen ausgebildet sind und an den Innenwänden des Gehäuses befestigt sind, umfasst.

9. Ventilator nach Anspruch 7,
**dadurch gekennzeichnet,**
**dass** das zweite stützende Element eine Motorenlagerungseinheit, an der das hintere Ende des Motors befestigt ist, eine Vielzahl von Stützstangen, welche sich von der Motorhalterungseinheit nach außen erstrecken, und Befestigungseinheiten, welche fest an den äußeren Enden der Stützstangen ausgebildet sind und an den Innenwänden des Gehäuses befestigt sind, umfasst.

10. Ventilator nach Anspruch 6,
**dadurch gekennzeichnet,**
**dass** jede der ersten und zweiten Luftgebläseeinrichtungen ferner ein Lüfterrad-Gehäuse zum Führen des Luftflusses umfasst, welches eingebaut ist, um die Blätter des spiralförmigen Lüfterrades zu umgeben.

11. Ventilator nach Anspruch 10,
**dadurch gekennzeichnet,**
**dass** Erweiterungseinheiten in dem Lüfterrad-Gehäuse gebildet sind, wobei deren Durchmesser vom mittleren Teil bis zum vorderen Ende und dem hinteren Ende des Lüfterradgehäuses zunimmt.

12. Ventilator nach Anspruch 11,
**dadurch gekennzeichnet,**
**dass** der mittlere Teil des Lüfterradgehäuses zwischen den Erweiterungseinheiten in Form einer geraden Linie ausgebildet ist.

13. Ventilator nach Anspruch 10 oder 11,
**dadurch gekennzeichnet,**
**dass** das Lüfterradgehäuse symmetrisch aufgeteilt ist in erste und zweite Lüfterradgehäuse vom spiralförmigen Lüfterrad.

14. Ventilator nach Anspruch 6,
**dadurch gekennzeichnet,**
**dass** das vordere Ende des Motors in die Nabe des spiralförmigen Lüfterrads eingebracht ist.

15. Ventilator nach Anspruch 2,
**dadurch gekennzeichnet,**
**dass** eine Kontrollöffnungen dem Gehäuse ausgebildet ist, so dass der Wärmetauscher mit dem Gehäuse verbunden oder vom Gehäuse entbunden werden kann.

16. Ventilator nach Anspruch 15,
**dadurch gekennzeichnet,**
**dass** der Wärmeaustauscher im Gehäuse so installiert ist, dass er auf gleicher Höhe mit einer Oberfläche des Gehäuses ist, wo die Innenluft-Ansaugöffnung und die Außenluft-Auslassöffnung gebildet wurden, und die Kontrollöffnung auf einer Seitenoberfläche des Gehäuses vertikal zu einer Oberfläche gebildet ist, wo die Innenluft-Ansaugöffnung und die Außenluft-Auslassöffnung geformt wurden.

17. Ventilator nach Anspruch 16, ferner mit einer Innenluft-Durchlassführung, welche in einer Seite des Gehäuses, wo die Innenluft-Ansaugöffnung vom Wärmeaustauscher geformt wurde, eingebaut ist, zum Führen von Innenluft oder Außenluft entlang den ersten Durchlässen des Wärmetauschers.

18. Ventilator nach Anspruch 17, ferner mit einer Außenluft-Durchlassführung, welche auf der anderen Seite des Gehäuses, wo die Außenluft-Ansaugöffnung vom Wärmetauscher gebildet wurde, eingebaut ist, zum Führen von Innenluft oder Außenluft entlang den zweiten Durchlässen des Wärmetauschers.

19. Ventilator nach Anspruch 18,
**dadurch gekennzeichnet,**
**dass** Führungsvorsprünge in der Längsrichtung an beiden Enden des Wärmetauschers gebildet sind und Führungsnuten in der Längsrichtung an den Enden der Innenluft-Durchlassführung und der Außenluft-Durchlassführung gebildet sind, so dass die Führungsvorsprünge des Wärmetauschers in die Führungsnuten verschiebbar eingebracht werden können.

20. Ventilator nach Anspruch 18, ferner mit einem Filter zum Filtern von Staub der Außenluft, wobei der Filter zwischen dem Ende der Außenluft-Durchlassführung und den zweiten Durchlässen des Wärmetauschers eingebaut ist.

21. Ventilator nach Anspruch 16,
**dadurch gekennzeichnet,**
**dass** ein erster Nebenleitungs-Dämpfer zur Öffnung der Durchlässe zwischen der Innenluft-Ansaugöffnung und der Innenluft-Auslassöffnung zwischen dem Wärmetauscher und dem Gehäuse eingebaut ist, um geöffnet oder geschlossen zu werden.

22. Ventilator nach Anspruch 21,
**dadurch gekennzeichnet,**
**dass**, wenn das spiralförmige Lüfterrad der ersten Luftgebläseeinrichtung rotiert wird, um Innenluft anzusaugen, der Zustand offen/geschlossen des ersten Nebenleitung-Dämpfers kontrollierbar ist.

23. Ventilator nach Anspruch 16,
**dadurch gekennzeichnet,**
**dass** ein zweiter Nebenleitungs-Dämpfer zum Öffnen der Durchlässe zwischen der Außenluft-Ansaugöffnung und der Außenluft-Auslassöffnung zwischen dem Wärmetauscher und dem Gehäuse eingebaut ist, um geöffnet oder geschlossen zu werden.

24. Ventilator nach Anspruch 23,
**dadurch gekennzeichnet,**
**dass** wenn das spiralförmige Lüfterrad der zweiten Luftgebläseeinrichtung rotiert wird, um Innenluft anzusaugen, der Status offen/geschlossen des zweiten Nebenleitungs-Dämpfers kontrollierbar ist.

25. Ventilator nach Anspruch 15,
**dadurch gekennzeichnet,**
**dass** der Wärmetauscher vertikal zu einer Oberfläche des Gehäuses, wo die Innenluft-Ansaugöffnung und die Außenluft-Auslassöffnung gebildet wurden, eingebaut ist, und die Kontrollöffnung an der Bodenfläche des Gehäuses gebildet ist.

26. Ventilator nach Anspruch 25, ferner mit einer Innenluft-Durchlassführung, welche auf einer Seite des Gehäuses, wo die Innenluft-Ansaugöffnung von dem Wärmetauscher gebildet wurde, eingebaut ist, zum Führen von Innenluft oder Außenluft entlang den ersten Durchlässen des Wärmetauschers.

27. Ventilator nach Anspruch 26, ferner mit einer Außenluft-Durchlassführung, welche auf der anderen Seite des Gehäuses, wo die Außenluft-Auslassöffnung von dem Wärmetauscher gebildet wurde, eingebaut ist, zum Führen von Innenluft oder Außenluft entlang den zweiten Durchlässen des Wärmetauschers.

28. Ventilator nach Anspruch 27,
**dadurch gekennzeichnet,**
**dass** Führungsvorsprünge gebildet sind in der Höhenrichtung an den vorderen und hinteren Enden des Wärmetauschers und Führungsnuten gebildet sind in der Höhenrichtung auf einer Oberfläche des Gehäuses zwischen der Innenluft-Ansaugöffnung und der Außenluft-Auslassöffnung und in einem Teilbereich, welcher zwischen der ersten und zweiten Luftgebläseeinrichtung eingebaut ist, so dass die Führungsvorsprünge verschiebbar in die Führungsnuten eingebracht werden können.

29. Ventilator nach Anspruch 28,
**dadurch gekennzeichnet,**
**dass** Abdicht-Führungsvorsprünge gebildet sind in der Längsrichtung an beiden Enden des Wärmetauschers, um die Innenluft-Durchlassführung und die Außenluft-Durchlassführung zu verbinden, und elastische Abdichtelemente, welche in der Längsrichtung herausragen, an den Enden der Innenluft-Durchlassführung und der Außenluft-Durchlassführung befestigt sind, so dass die Abdichtführungsvorsprünge nahe an die elastischen Abdichtelemente anhaften können.

30. Ventilator nach Anspruch 27, ferner mit einem Filter zum Filtern von Staub der Außenluft, wobei der Filter zwischen dem Ende der Außenluft-Durchlassführung und den zweiten Durchlässen des Wärmetauschers eingebaut ist.

## Revendications

1. Ventilateur, comprenant :
une enveloppe ayant un orifice d'aspiration d'air intérieur et un orifice de rejet d'air extérieur reliés au côté intérieur, et un orifice de rejet d'air intérieur et un orifice d'aspiration d'air extérieur reliés au côté extérieur ;
un échangeur de chaleur installé dans l'enveloppe, pour former des premiers et deuxièmes passages en vue d'un écoulement séparé d'air intérieur et d'air extérieur, et pour échanger de la chaleur entre l'air intérieur et l'air extérieur ;
un premier moyen de soufflage d'air installé sur des passages formés entre l'orifice d'aspiration d'air intérieur et l'orifice de rejet d'air intérieur, pour rejeter l'air intérieur ou, en variante, aspirer l'air extérieur en fonction du sens de rotation ; et
un deuxième moyen de soufflage d'air installé sur des passages formés entre l'orifice d'aspiration d'air extérieur et l'orifice de rejet d'air extérieur, pour aspirer l'air extérieur ou, en variante, rejeter l'air intérieur en fonction du sens de rotation.

2. Ventilateur selon la revendication 1, dans lequel chacun des premier et deuxième moyens de soufflage d'air comprend un ventilateur à volute entraîné en rotation dans la direction avant ou arrière, pour souffler de manière forcée de l'air dans la direction axiale ou, en variante, dans la direction frontale.

3. Ventilateur selon la revendication 2, dans lequel le premier moyen de soufflage d'air est installé dans l'orifice de rejet d'air intérieur.

4. Ventilateur selon la revendication 2, dans lequel le deuxième moyen de soufflage d'air est installé dans l'orifice d'aspiration d'air extérieur.

5. Ventilateur selon la revendication 2, dans lequel le ventilateur à volute comprend un moyeu cylindrique, et des pales en spirale qui sont torsadées en spirale d'une extrémité à l'autre extrémité du moyeu sur la circonférence extérieure du moyeu, et ayant une largeur prédéterminée dans la direction axiale.

6. Ventilateur selon la revendication 5, dans lequel chacun des premier et deuxième moyens de soufflage d'air comprend en plus un moteur auquel est couplé un axe de rotation sortant de l'extrémité arrière du ventilateur à volute, le moteur faisant tourner l'axe de rotation dans la direction vers l'avant ou l'arrière, et au moins un élément de support du ventilateur destiné à supporter le ventilateur à volute et le moteur dans l'enveloppe.

7. Ventilateur selon la revendication 6, dans lequel l'élément de support du ventilateur comprend un premier élément de support destiné à supporter de manière rotative l'extrémité avant de l'axe de rotation sortant de l'extrémité frontale du ventilateur à volute, et un deuxième élément de support destiné à supporter le moteur dans l'extrémité arrière du ventilateur à volute.

8. Ventilateur selon la revendication 7, dans lequel le premier élément de support comprend une unité d'appui à laquelle l'extrémité avant de l'axe de rotation est couplée en rotation, une pluralité de barres de support s'étendant à l'extérieur depuis l'unité d'appui, et des unités de fixation formées fixement dans les extrémités extérieures des barres de support et fixées aux parois intérieures de l'enveloppe.

9. Ventilateur selon la revendication 7, dans lequel le deuxième élément de support comprend une unité de montage du moteur à laquelle est fixée l'extrémité arrière du moteur, une pluralité de barres de support s'étendant extérieurement depuis l'unité de montage du moteur, et des unités de fixation formées fixement dans les extrémités extérieures des barres de support et fixées aux parois intérieures de l'enveloppe.

10. Ventilateur selon la revendication 6, dans lequel chacun des premier et deuxième moyens de soufflage d'air comprend de plus une enveloppe de ventilateur installée de manière à entourer les pales du ventilateur à volute, afin de guider l'écoulement d'air.

11. Ventilateur selon la revendication 10, dans lequel des unités étendues ayant un diamètre augmenté en allant de la partie médiane à l'extrémité avant et à l'extrémité arrière de l'enveloppe de ventilateur sont formées dans l'enveloppe de ventilateur.

12. Ventilateur selon la revendication 11, dans lequel la partie médiane de l'enveloppe de ventilateur entre les unités étendues est réalisée en forme de ligne droite.

13. Ventilateur selon la revendication 10 ou 11, dans lequel l'enveloppe de ventilateur est divisée symétriquement en première et deuxième enveloppes de ventilateur à partir du ventilateur à volute.

14. Ventilateur selon la revendication 6, dans lequel l'extrémité avant du moteur est insérée dans le moyeu du ventilateur à volute.

15. Ventilateur selon la revendication 2, dans lequel un orifice d'inspection est formé sur l'enveloppe, de façon que l'échangeur de chaleur puisse être raccordé ou désolidarisé de l'enveloppe.

16. Ventilateur selon la revendication 15, dans lequel l'échangeur de chaleur est installé dans l'enveloppe de manière à être de niveau avec une surface de l'enveloppe où ont été formés l'orifice d'aspiration d'air intérieur et l'orifice de rejet d'air extérieur, et l'orifice d'inspection est formé sur une surface latérale de l'enveloppe verticale par rapport à une surface où ont été formés l'orifice d'aspiration d'air intérieur et l'orifice de rejet d'air extérieur.

17. Ventilateur selon la revendication 16, comprenant de plus un guide de passage d'air intérieur installé sur un côté de l'enveloppe où l'orifice d'aspiration d'air intérieur a été formé à partir de l'échangeur de chaleur, pour guider l'air intérieur ou l'air extérieur le long des premiers passages de l'échangeur de chaleur.

18. Ventilateur selon la revendication 17, comprenant de plus un guide de passage d'air extérieur installé dans l'autre côté de l'enveloppe où l'orifice d'aspiration d'air extérieur a été formé à partir de l'échangeur de chaleur, pour guider l'air intérieur ou l'air extérieur le long des deuxièmes passages de l'échangeur de chaleur.

19. Ventilateur selon la revendication 18, dans lequel des saillies de guidage sont formées dans la direction longitudinale dans les deux extrémité de l'échangeur de chaleur, et des rainures de guidage sont formées dans la direction longitudinale dans les extrémités du guide de passage d'air intérieur et du guide de passage d'air extérieur, de façon que les saillies de guidage de l'échangeur de chaleur puissent être insérées de manière coulissante dans les rainures de guidage.

20. Ventilateur selon la revendication 18, comprenant de plus un filtre installé entre l'extrémité du guide de passage d'air extérieur et les deuxièmes passages de l'échangeur de chaleur, pour filtrer la poussière de l'air extérieur.

21. Ventilateur selon la revendication 16, dans lequel un premier registre de dérivation destiné à ouvrir les passages entre l'orifice d'aspiration d'air intérieur et l'orifice de rejet d'air intérieur est installé pour être ouvert ou fermé entre l'échangeur de chaleur et l'enveloppe.

22. Ventilateur selon la revendication 21 dans lequel, lorsque le ventilateur à volute du premier moyen de soufflage d'air est mis en rotation pour aspirer l'air intérieur, l'état ouvert/fermé du premier registre de dérivation est contrôlé.

23. Ventilateur selon la revendication 16, dans lequel un deuxième registre de dérivation destiné à ouvrir les passages entre l'orifice d'aspiration d'air extérieur et l'orifice de rejet d'air extérieur est installé pour être ouvert ou fermé entre l'échangeur de chaleur et l'enveloppe.

24. Ventilateur selon la revendication 23 dans lequel, lorsque le ventilateur à volute du deuxième moyen de soufflage d'air est mis en rotation pour aspirer l'air intérieur, l'état ouvert/fermé du deuxième registre de dérivation est contrôlé.

25. Ventilateur selon la revendication 15, dans lequel l'échangeur de chaleur est installé verticalement par rapport à une surface de l'enveloppe où l'orifice d'aspiration d'air intérieur et l'orifice de rejet d'air extérieur ont été formés, et l'orifice d'inspection est formé sur la surface inférieure de l'enveloppe.

26. Ventilateur selon la revendication 25, comprenant de plus un guide de passage d'air intérieur installé sur un côté de l'enveloppe où l'orifice d'aspiration d'air intérieur a été formé à partir de l'échangeur de chaleur, pour guider l'air intérieur ou l'air extérieur le long des premiers passages de l'échangeur de chaleur.

27. Ventilateur selon la revendication 26, comprenant de plus un guide de passage d'air extérieur installé dans l'autre côté de l'enveloppe où l'orifice de rejet d'air extérieur a été formé à partir de l'échangeur de chaleur, pour guider l'air intérieur ou l'air extérieur le long des deuxièmes passages de l'échangeur de chaleur.

28. Ventilateur selon la revendication 27, dans lequel des saillies de guidage sont formées dans la direction de la hauteur dans les extrémités avant et arrière de l'échangeur de chaleur, et des rainures de guidage sont formées dans le sens de la hauteur sur une surface de l'enveloppe entre l'orifice d'aspiration d'air intérieur et l'orifice de rejet d'air extérieur et sur une cloison installée entre les premier et deuxième moyens de soufflage d'air, de façon que les saillies de guidage puissent être insérées par coulissement dans les rainures de guidage.

29. Ventilateur selon la revendication 28, dans lequel des saillies de guidage d'étanchéité sont formées dans le sens de la longueur dans les deux extrémités de l'échangeur de chaleur pour être en contact avec le guide de passage d'air intérieur et le guide de passage d'air extérieur, et des éléments élastiques d'étanchéité en saillie dans le sens de la longueur sont fixés aux extrémités du guide de passage d'air intérieur et du guide de passage d'air extérieur, de façon que les saillies de guidage d'étanchéité puissent adhérer étroitement aux éléments élastiques d'étanchéité.

30. Ventilateur selon la revendication 27, comprenant de plus un filtre installé entre l'extrémité du guide de passage d'air de sortie et les deuxièmes passages de l'échangeur de chaleur, pour filtrer la poussière de l'air extérieur.
